(19) Europäisches Patentamt
European Patent Office
Office européen des brevets

(11) **EP 4 372 404 A1**

(12) **EUROPEAN PATENT APPLICATION**

(43) Date of publication:
**22.05.2024 Bulletin 2024/21**

(21) Application number: **22207713.3**

(22) Date of filing: **16.11.2022**

(51) International Patent Classification (IPC):
**G01S 7/35** (2006.01) **G01S 13/34** (2006.01)
**G01S 13/58** (2006.01) **G01S 13/931** (2020.01)

(52) Cooperative Patent Classification (CPC):
**G01S 13/584; G01S 7/356; G01S 13/34;
G01S 13/931**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **NXP B.V.
5656 AG Eindhoven (NL)**

(72) Inventors:
• **Rutten, Robert
Eindhoven (NL)**
• **Hekstra, Andries Pieter
Eindhoven (NL)**
• **Drago, Salvatore
Eindhoven (NL)**
• **Saric, Tarik
Eindhoven (NL)**

(74) Representative: **Krott, Michel
NXP Semiconductors
Intellectual Property Group
High Tech Campus 60
5656 AG Eindhoven (NL)**

Remarks:
Amended claims in accordance with Rule 137(2)
EPC.

(54) **RADAR SENSOR**

(57) A radar sensor comprising a chirp generator that is configured to provide radar signalling for transmission. The radar signalling comprises a sequence of radar chirps, and wherein each radar chirp has a chirp slope that defines the rate of change of frequency in the radar chirp. A mixer multiplies the transmitted radar signalling with a received, reflected version of the transmitted radar signalling in order to provide analogue intermediate frequency, IF, signalling. An ADC samples the IF signalling in order to generate digital signalling. A digital processor populates a 2-dimensional array of bin-values based on the digital-values, such that: a first axis of the 2-dimensional array is a fast time axis and a second axis of the 2-dimensional array is a slow time axis. A chirp slope frequency adjuster sets the chirp slope of the radar chirps based on an index in the sequence of radar chirps. The digital processor performs DFT calculations on the bin-values in the 2-dimensional array along the fast time axis and the slow time axis in order to determine the range and velocity of any detected objects.

Figure 12

EP 4 372 404 A1

**Description**

**Field**

The present disclosure relates to radar sensors and associated methods. In particular to radar sensors and methods that can mitigate a loss of sensitivity that can occur when an object that is to be detected is in motion.

**Summary**

According to a first aspect of the present disclosure there is provided a radar sensor comprising:

a chirp generator that is configured to provide radar signalling for transmission, wherein the radar signalling comprises a sequence of radar chirps, and wherein each radar chirp has a chirp slope that defines the rate of change of frequency in the radar chirp;
a mixer that is configured to multiply the transmitted radar signalling with a received version of the transmitted radar signalling that has been reflected from any detected objects in order to provide analogue intermediate frequency, IF, signalling;
an analogue to digital converter, ADC, that is configured to sample the analogue intermediate frequency, IF, signalling in order to generate digital signalling, wherein the digital signalling comprises a plurality of digital-values;
a digital processor that is configured to populate a 2-dimensional array of bin-values based on the digital-values, such that: a first axis of the 2-dimensional array is a fast time axis and a second axis of the 2-dimensional array is a slow time axis;
a chirp slope frequency adjuster that is configured to set the chirp slope of the radar chirps based on an index in the sequence of radar chirps; and
wherein the digital processor is further configured to perform discrete Fourier transform, DFT, calculations on the bin-values in the 2-dimensional array along the fast time axis and the slow time axis in order to determine the range and velocity of any detected objects.

In one or more embodiments, the chirp slope frequency adjuster is configured to set the chirp slope of the radar chirps based on the index in the sequence of radar chirps such that the difference between the chirp slope for consecutive chirps in the sequence is less than that of a bin in the fast time axis of the 2-dimensional array of bin-values. Optionally less that 50%, 25%, 10% or 5% of a bin in the fast time axis of the 2-dimensional array of bin-values.
In one or more embodiments, the sequence of radar chirps comprises at least 128 chirps, at least 256 chirps, at least 512 chirps, or at least 1024 chirps.
In one or more embodiments, the chirp slope frequency adjuster is configured to set the chirp slope of the radar chirps based on the corresponding index of the slow time axis, by applying a linear function to the index of the slow time axis to set the chirp slope.
In one or more embodiments, the chirp slope frequency adjuster is configured to set the chirp slope of the radar chirps based on the corresponding index of the slow time axis, by applying one or more of:

a non-linear function to the index of the slow time axis to set the chirp slope;
a parabolic function to the corresponding index of the slow time axis to set the chirp slope;
an oscillating function to the corresponding index of the slow time axis to set the chirp slope; and
a stochastic function to the index of the corresponding slow time axis to set the chirp slope.

In one or more embodiments, the radar sensor is configured to receive a control signal. The chirp slope frequency adjuster may be configured to set the chirp slope of the radar chirps by applying one of a plurality of predetermined functions to the corresponding index of the slow time axis based on the control signal.
In one or more embodiments, the control signal represents an operational characteristic of an automobile to which the radar sensor is fitted.
In one or more embodiments, the control signal is a sensed signal that represents a sensed operational characteristic of the automobile.
In one or more embodiments, the operational characteristic is:

the speed of the automobile; and / or
representative of an oscillation that is associated with a component of the automobile to which the radar sensor is fitted.

In one or more embodiments, the chirp slope frequency adjuster is configured to set the chirp slope of the radar chirps based on: (i) the index of the slow time axis; and (ii) a targeted range / velocity ratio.

In one or more embodiments, the chirp slope frequency adjuster is configured to set the chirp slope of the radar chirps such that the chirp slope for the maximum index of the slow time axis corresponds to a maximum range / maximum velocity of the radar sensor.

In one or more embodiments the mixer is configured to multiply the received version of the transmitted radar signalling by both: a 2-dimensional beat signal that represents a predetermined constant velocity; and the transmitted radar signalling, in order to provide the analogue intermediate frequency, IF, signalling.

In one or more embodiments, the chirp slope frequency adjuster is configured to set the chirp slope of the radar chirps by setting the value of a digital control word that controls the chirp slope of the radar chirps.

In one or more embodiments, the ADC and the digital processor have time bases that are in a fixed relationship with reference to each other.

There is also disclosed a radar system that comprises a plurality of any of the radar sensors disclosed herein, wherein the radar system is configured to combine the velocity that is determined by each of the radar sensors to determine: a combined velocity value for a detected object, and optionally a direction to the detected object.

According to a further aspect of the present disclosure, there is provided a computer-implemented method of determining the velocity of a detected object, the method comprising:

> providing radar signalling for transmission, wherein the radar signalling comprises a sequence of radar chirps, wherein each radar chirp has a chirp slope that defines the rate of change of frequency in the radar chirp, and wherein the chirp slope of the radar chirps is set based on an index in the sequence of radar chirps;
> multiplying the transmitted radar signalling with a received version of the transmitted radar signalling that has been reflected from any detected objects in order to provide analogue intermediate frequency, IF, signalling;
> sampling the analogue intermediate frequency, IF, signalling in order to generate digital signalling, wherein the digital signalling comprises a plurality of digital-values;
> populating a 2-dimensional array of bin-values based on the digital-values, such that: a first axis of the 2-dimensional array is a fast time axis and a second axis of the 2-dimensional array is a slow time axis; and
> performing DFT calculations on the bin-values in the 2-dimensional array along the fast time axis and the slow time axis in order to determine the range and velocity of any detected objects.

While the disclosure is amenable to various modifications and alternative forms, specifics thereof have been shown by way of example in the drawings and will be described in detail. It should be understood, however, that other embodiments, beyond the particular embodiments described, are possible as well. All modifications, equivalents, and alternative embodiments falling within the spirit and scope of the appended claims are covered as well.

The above discussion is not intended to represent every example embodiment or every implementation within the scope of the current or future Claim sets. The figures and Detailed Description that follow also exemplify various example embodiments. Various example embodiments may be more completely understood in consideration of the following Detailed Description in connection with the accompanying Drawings.

## Brief Description of the Drawings

One or more embodiments will now be described by way of example only with reference to the accompanying drawings in which:

> Figure 1 shows an Frequency Modulated Continuous Wave (FMCW) radar sensor;
> Figure 2 shows an example of a 2-dimensional array of bin-values, for a single antenna element;
> Figure 3 shows a 3-dimensional array of bin-values for a system that has a plurality of antenna elements;
> Figure 4 shows schematically an example of a 2-dimensional array of bins;
> Figure 5 shows a radar sensor that includes a sampling-rate-adjuster that can set a sampling rate associated with the bin-values in the 2-dimensional array based on an index of the slow time axis;
> Figure 6 shows a sequence of FMCW range spectra as a function of chirp index;
> Figure 7 shows how a size of the range frequency axis could be maintained, but a slight range shift is applied per chirp, that varies linearly across the sequence of successive chirp measurements, in order to match the trajectory of the (high) velocity of particular interest during the (active) radar measurement time interval;
> Figure 8 schematically shows how the length of the (unambiguous) range axis can be slightly (linearly) stretched in order to match the ratio of the displacement (d) of an object during the measurement time divided by the distance of the object to the radar also called range r of objects of high interest;
> Figure 9 schematically shows how the length of the (unambiguous) range axis can be slightly (linearly) compressed in order to match the ratio d÷r of objects of high interest;

Figure 10 provides an overview of a simulation setup for a system in which the sampling rate that is associated with the bin values in the 2-dimensional array is adjusted;

Figure 11 shows a plot that illustrates the spectral impact of ADC clock rate adaptation that can be performed by the simulation setup of Figure 10 for a single target;

Figure 12 shows an example embodiment of a radar sensor according to the present disclosure;

Figure 13 shows a plot that illustrates the spectral impact of the chirp slope adaptation that can be performed by the radar sensor of Figure 12, again for a single target;

Figure 14 shows results for the system of Figure 10 when it detects four targets, when using a different ADC sample rate;

Figure 15 shows the results for the system of Figure 12 when it detects four targets, when the time base is kept the same between ADC and FFT and the chirp slope is scaled down with 0.9 to 450HMz/25us;

Figure 16 shows an example of the spectral impact of chirp slope adaption for a relatively small slope adaptation;

Figure 17 shows range migration issues for several types of displacement profiles;

Figure 18 shows correction signals, one for each of the plots in Figure 17, as a slope adaptation vs chirp index; and

Figure 19 schematically illustrates a computer-implemented method of determining the velocity of a detected object.

## Detailed Description

Radar has a long history in the military domain and in other markets such as avionics and shipping. Radar systems described herein are particularly well-suited to radar applications in the consumer market such as automotive radars. In such applications, the complexity and cost of the radar system needs to be a small fraction of the cost of the consumer good that the radar system is a part of. In 2021, next generations of cars are being designed with tens of radar integrated circuits (ICs) per car, providing a wide range of services to the driver. Examples of performance dimensions for such radar ICs include the following:

- Sensitivity of detecting objects with small radar cross section at a large distance.
- Accuracy of object locations and velocities detected by the radar.
- Power & IC area consumption.

In automotive applications in particular, the introduction of processing methods / circuits that improve the performance of a radar IC should cause minimal additional IC area and / or power consumption.

In general, the detectability of objects by a radar is limited by the so-called channel noise present at the input of the radar receiver, where multiple noise sources add up. Such noise sources can include:

- Radio noise that impinges upon the radar receive antennas.
- Additive thermal noise from circuit components in an analogue frontend of the radar receiver.
- Multiplicative phase noise from frequency mixing with (intermediate) carrier frequencies obtained from a Phased Locked Loop (PLL).
- Interference from other radars in the same frequency band and / or other radio transmitters in adjacent spectral bands.

As automotive radars illuminate their own targets, the energy transmitted by the radar towards radar objects decays along both:

- the propagation path(s) from the transmit antenna(s) to the object, e.g. inversely proportional to the square of the distance between transmitter and object (referred to as range r), and
- the propagation path(s) from the radar object back to the receive antenna(s), e.g. following the same power law.

Consequently, for a given radar cross section of a radar object, the received signal strength can decay inversely proportionally to the fourth power of the range. It is important that advanced signal processing combines the received radar signal across a time interval of sufficient duration in order to accumulate a total detected signal value above the channel noise for important categories of radar objects, such as:

- targets that are relatively small or do not reflect the radar signal very well (e.g. pedestrians),
- objects at relatively large distance to the radar.

The detectability of radar objects may be limited by:

- the limited radiated antenna output power, e.g. from government regulations,
- the two-way path loss of the radio energy between the transmit antennas, the radar object and the receive antennas, as discussed above,
- the channel noise in the radar receiver, again as discussed above.

In addition, the detectability of radar objects may also be limited for objects that have a high velocity relative to the radar. If the object motion within a single radar measurement time is not negligible relative to the resolution of the range measurement (range resolution=c/(2B) where c is the speed of light and B is the RF bandwidth), then motion blur can occur. This can also be known as displacement. For instance, a high speed object may displace itself 1 or 2 meters during the collection of a data cube or frame of FMCW radar baseband samples (as discussed below). If the radar has a range resolution of some tens of centimetres, the object can traverse through 5 to 10 pixels / bins in the radar's range-velocity "image" during measurement. The received signal energy (after range and Doppler processing) associated with that object is thereby smeared, more or less evenly, across these pixels / bins, instead of the energy being concentrated in a single or a few pixels / bins. Consequently, the energy in each of these pixels / bins is lowered to a degree where it may not be discernible from the channel noise with sufficient statistical confidence. In which case, the object can go undetected.

In the case of an automotive radar, for a given maximum allowed velocity on a road, the maximum (absolute value of) the relative radial velocity of two opposing cars is twice as high as the radial velocity of the individual cars. The maximum speed difference that needs to be supported by the radar hardware and software may differ per application or use case of the radar. The maximum displacement of a radar object within the radar measurement time equals the product of this radar measurement time and the maximum relative radial velocity of an object relative to the radar that needs to be supported. In the step towards a next generation of an existing radar chip design, the support of additional applications or use cases may increase the ratio between measurement time and distance resolution that needs to be considered. For instance, in the design of a radar used in an automotive parking application, the velocity of the car itself can be assumed to be small. Then, a successor product may e.g. also cover lane change assist functions, and need to include larger differential velocities between the car carrying the radar and other objects. An increase of the radar measurement time can help to increase the sensitivity of the radar chip. The introduction of compensation means for motion blur in the receive chain may enable such an increase of supported object velocity and radar measurement time.

In FMCW radar, a signal is transmitted where its frequency increases in a linear way. When the signal is reflected from a target, it will arrive at the receive antenna (close to the transmit antenna) after $\frac{2R}{c_0} [seconds]$ , where R is the distance to the target [m], and $C_0$ equals the speed of light [m/sec]. The factor of 2 is there because the signal must travel to the target, and back to the receiver again. During this time the frequency of the transmit signal has increased in a linear fashion. By mixing the transmit signal with the receive signal, a delta frequency can be obtained which is a measure for the distance (there is a linear relation between distance and frequency). The frequency is typically found by performing an FFT on the mixed signal, resulting in spectral peaks at the range-FFT frequencies ("range bins") at which objects are present in range bins.

When multiple of these range measurements are done consecutively, the velocity delta between transceiver and target can be computed by running a second FFT across the same range bin index of chirps, resulting in velocity bins. Along the sequence of frequency components in the same range bin of successive range-FFT's ("column"), the received signal component of a radar object has a Doppler phase rotation depending on the object's velocity. A set of velocity FFT's along said columns breaks down the received signal energy along the velocity axis. One problem which occurs when the target changes its range (R) between the first chirp and the last chirp, which causes an effect called motion blur. Further details are provided below.

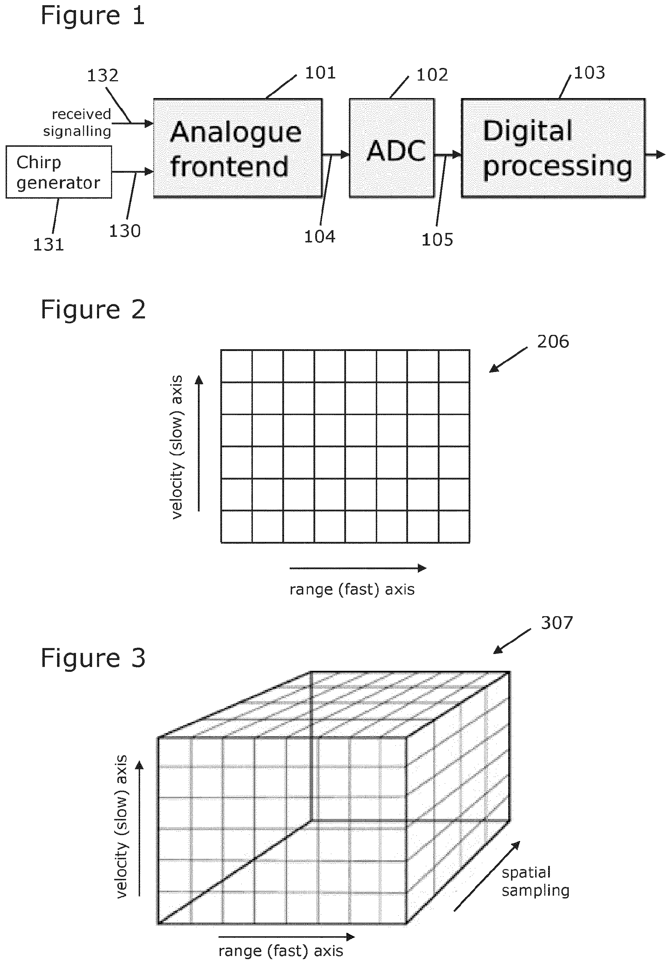

Figure 1 shows an Frequency Modulated Continuous Wave (FMCW) radar receiver. In stretch processing based FMCW radar, the received radar signal 132 is multiplied with the (complex conjugate) of the transmitted signal 130, where the transmitted signal 130 is a linear frequency ramp that is often referred to as a radar chirp. The transmitted signal 130 is provided by a chirp generator 131. In this way, the chirp generator 131 provides radar signalling for transmission that comprises a sequence of radar chirps, wherein each radar chirp has a chirp slope that defines the rate of change of frequency in the radar chirp.

With a suppressed high frequency component, the product of the received radar signal 132 and the (complex conjugate) of the transmitted signal 130 is called the beat signal, which can also be referred to as analogue intermediate frequency, IF, signalling. As is known in the art, a mixer (not shown) can be used to provide the beat signal. This way, the two-way propagation delay from the radar transmit antennas to the radar object and back to the radar receive antennas is translated into a proportional difference frequency component ("beat frequency") per observed object.

In the analysis and computer simulation of radar systems, it can often suffice to model an object with a limited number of parameters:

- the distance to the radar, called the range r,
- the radial velocity v of the object relative to the radar, and
- the effective reflection area or the radar cross section of the object.

That is, the acceleration of the object during the measurement of the radar frame can often, but not always, be neglected.

The FMCW radar receiver of Figure 1 includes an analogue frontend 101 that multiplies analogue signalling 132 received from a radar antenna by the transmitted signalling 130 in order to provide analogue intermediate frequency (IF) signalling 104. As discussed above, this IF signalling 104 can also be referred to as beat signalling. The analogue frontend 101 provides the analogue IF signalling 104 to an analogue to digital converter (ADC) 102. The analogue frontend 101 can apply a low-pass and a high pass filter. Also, as is known in the art, the FMCW radar receiver can include a real or quadrature reception paths. The ADC 102 samples the analogue IF signalling 104 according to a sampling rate in order to generate digital signalling 105. The digital signalling 105 comprises a plurality of digital-values.

The ADC 102 then provides the digital signalling 105 to a digital processor 103. The digital processor 103 populates a 2-dimensional array of bin-values with the digital-values of the digital signalling 105.

Figure 2 shows an example of a 2-dimensional array 206 of bin-values, for a single antenna element. The digital-values of the digital signalling are populated into the 2-dimensional array 206 starting at the bottom left bin / cell of the 2-dimensional array 206, and then along the bottom row to the right. The entire bottom row of bin-values corresponds to a single waveform of radar data, which in this example is a single frequency ramp / chirp. The data-values that correspond to a second waveform / chirp of radar data are then populated into the next row (the one above the bottom row). Additional rows of bin-values are populated with digital-values for subsequent waveforms / chirps of radar data until all of the rows have been populated and the 2-dimensional array 206 of data that will be used for radar measurement is complete. The row data may be stored in on-chip or off-chip memory in original form, or after data compression to reduce the size of the required computer memories. In this way, the 2-dimensional array of bin-values is populated such that each index of the slow time axis represents a different radar chirp from the sequence of radar chirps in the IF signalling. As is known in the art, a first axis of the 2-dimensional array 206 is a fast time axis, and is the horizontal axis in Figure 2. A set of (horizontal) DFTs is then performed on the bin-values along the fast time axis, following which the axis can be referred to as a range axis. A second axis of the 2-dimensional array 206 is a slow time axis, and is the vertical axis in Figure 2. A set of (vertical) DFTs is then performed on the range bin-values along the slow time axis, following which the axis can be referred to as a velocity axis. This is the exploitation of the Doppler effect that displacement causes phase rotation; displacement at a certain rate, that corresponds to a certain velocity, causes a certain vertical frequency component. In some examples, these DFTs (discrete Fourier transforms) can be implemented as FFTs (fast Fourier transforms). It will be appreciated that any reference to FFT herein can be considered as a specific implementation, and that the corresponding functionality can be provided more generally as a DFT.

In this way, for range-Doppler processing in radar systems, the time index within a single waveform (which in this example is a FMCW chirp), that allows determination of the range of objects, is referred to as the fast time axis (the horizontal axis in Figure 2). A coarser time axis, across a sequence of subsequent waveforms within a single radar measurement, that, through the Doppler effect, allows determination of the object velocities, is referred to as the slow time axis (the vertical axis in Figure 2).

In conventional implementations, the contribution of the Doppler effect to the magnitude of the IF oscillation frequency is negligible. In that case, a range and velocity pair (r,v) of a radar object corresponds to a 2D frequency in a 2D Fourier Fast Transform (FFT) of the received IF signal across the number of chirps in a frame. In this basic channel model, the displacement of objects during the frame time is assumed to be less than one or a few bins of the range-FFT. In the development of early generations of automotive radar chips, this classic model sufficed. 2D phasor matrixes of at the 2D frequencies that correspond to the respective (r,v)-pairs of radar objects need to be summed. The channel noise e.g. adds to this sum.

Figure 3 shows a 3-dimensional array 307 of bin-values for a system that has a plurality of antenna elements. The 3-dimensional array 307 of bin-values can also be referred to as a data cube, although as will be discussed below the third dimension is typically much smaller than the other two dimensions. The fast and slow axes that are labelled in Figure 3 correspond to the same axes in Figure 2. In this way, each 2-dimensional slice of the 3-dimensional array 307 corresponds to digital-values of digital signalling that are provided by a single antenna. Therefore, the number of 2-dimensional slices that are spaced apart in the third dimension (into the page in Figure 3) corresponds to the number of antenna elements in the radar system. It will thus be appreciated that any reference to a 2-dimensional array of bin-value in this document should be construed as an array of bin-value that has at least 2 dimensions. As is known in the art, the use of multiple antenna elements allows beamforming or other angular directive processing.

The collection of ADC samples along the slow time axis of chirp start times, ADC sampled fast time axis, and the axis of respective receive antenna elements, all as shown in Figure 3, can be referred to as a frame of samples.

Returning to Figure 1, the digital processor 103 can then perform Fast Fourier Transform (FFT) calculations on the 2- dimensional array or Figure 2 or the 3-dimensional array of Figure 3 in order to determine the range / distance to a detected object and / or the velocity of the detected object.

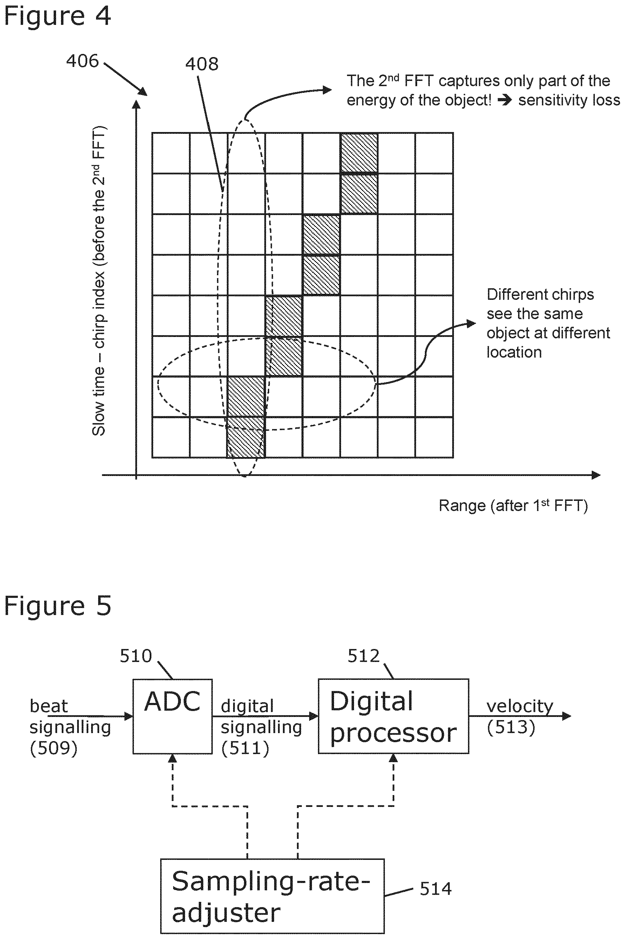

Figure 4 shows schematically an example of a 2-dimensional array 406 of bins. A first FFT has been performed along the range axis for each row of bins (i.e. for each waveform of the radar data), and the bin in which a single object is detected is shown shaded with a diagonal fill. It can be seen in this example that the object is identified in different range bins (i.e. bins with a different range index) for different rows of the 2-dimensional array 406 (i.e. for bins with a different index on the velocity axis). That is, different waveform / chirps see the same object at different locations. This is because the object is in motion radially with respect to the radar antenna. In this example the object is moving away from the radar antenna because its range is increasing along the slow time (vertical) axis.

Once the 2-dimensional array 406 of bins is fully populated with bin-values, and a first set of FFT calculations is performed on the bin-values along the fast time axis (for each slow time index on the vertical axis) yielding a set of spectra along a range axis in order to determine the distance to any detected objects (as illustrated by the cells that are shown shaded with a diagonal fill), a second set of FFT calculations can be performed. The second set of FFT calculations is performed on the bin-values in the 2-dimensional array along the slow time axis (for each fast time index on the horizontal axis) yielding a set of spectra along a velocity axis in order to determine the velocity of any detected objects. An example of one of the second FFT calculations is identified in Figure 4 with reference 408. It can be seen that, because the detected range of the object has changed over the timeframe that is represented by the 2-dimensional array 406, each one of the second set of FFT calculations captures only part of the energy of the object. This can be considered as the energy associated with the object being smeared across the bins in the range axis, resulting in a loss of sensitivity. This smearing of energy can be considered as motion blur.

One or more of the examples disclosed herein can realize partial compensation for the loss in detected peak height as a result of the motion blur for high velocity objects, at an acceptable implementation cost. As the received signal energy decreases both with the distance to the object from the radar and with the velocity of the object relative to the radar, compensation of motion blur and the loss in detected energy per pixel called peak height in the "large range and large velocity" part of the range-velocity domain of the radar map can be of high importance. Examples are disclosed herein that can improve the sensitivity for detecting an object with a large velocity and a large range (i.e. it is a relatively long way away from the radar antenna). Other examples disclosed herein can improve the sensitivity for detecting an object with a high velocity and a small range. Yet further examples can perform compensation for a non-linear change in the distance to the object from the radar, including a parabolic change, an oscillating change (such as can be represented by a sine wave), a random (but known) change in the distance, or any combination thereof.

Measurements by the radar system of range and/or velocity of objects are relative to the trajectory of the vehicle or other object of which the radar system is a component. Correspondingly, in the digital processing chain by default:

- a zero value for an observed range corresponds to "immediately in front of the radar"
- a zero value for an observed velocity corresponds to "having same velocity as vehicle, or other object that contains the radar".

Hence, the (range, velocity) pair (0,0) acts as default origin of the range-velocity plane, or measured radar map.

As is familiar to somebody skilled in the art of time-based (i.e. 1-dimensional) radio systems, the frequency axis of a signal may be shifted through multiplication with the complex conjugate of a carrier signal ("mixing") with a frequency equal to the frequency that is to be the new origin of the frequency axis. In FMCW radar, in the basic received beat signal model, an ideal constant velocity radar point object corresponds to a 2-dimensional phasor signal, with the range Fourier transform frequency along fast time acting as first frequency and the velocity Fourier transform frequency along slow time acting as second frequency. In FMCW beat signal models that include the displacement of objects within the data cube time, the phase of the beat signal not just has a

- constant phase offset term
- linearly increasing term with the fast time index
- linearly increasing term with the slow time index

but

- a term comprising the product of the fast time index and the slow time index.

Similar to the mixing with a 1-dimensional carrier signal that performs a 1-dimensional frequency shift yielding the frequency of said carrier signal as new origin of the frequency axis, mixing with a 2-dimensional beat signal of an ideal / predetermined constant velocity (r_0,v_0) radar point object yields a 2-dimensional frequency shift with the Fourier frequencies that correspond to (r_0,v_0) as a new origin of the range, velocity plane, or measured radar map. Blocks in the radar receiver block diagram that follow after such a multiplication with the complex conjugate of a measured / simulated received beat signal of an ideal, constant velocity radar point object in such a 2-dimensional mixing or idem frequency shift operation, then yield range, velocity values that are differential with respect to this new origin. That is, objects with true coordinate pairs (r,v) are observed in at (r-r_0, v-v_0). Such a generalized frequency shift is accurate both in basic channel model, and in applicable advanced FMCW beat signal models that include motion blur, alike.

Therefore, such a mixing method can shift in 2-dimensions "small range, high velocity" into "high range, velocity". We have already discussed how examples of the present disclosure can allow full compensation in the latter part of radar maps. The described redefinition of the origin beneficially allows definition of other "focus zones" in the radar map, as well.

Example embodiments of the present disclosure relate to a radar sensor that includes a chirp slope frequency adjuster that sets the chirp slope frequency for the chirps in the sequence of chirps based on an index of the slow time axis. Such a radar sensor can also be referred to as a radar transceiver in that it can include the functionality of a transmitter and a receiver. That is, with reference to Figure 2, each row in the 2-dimensional array 206 represents a different radar chirp in the sequence of radar chirps, and the chirp slope for each row is not necessarily the same as the other rows because the chirp slope is based on the index of the slow time (vertical) axis.

Before moving on to describing these example embodiments of the present disclosure, we will first describe a radar sensor in which a sampling rate associated with the bin-values in the 2-dimensional array 206 is adjusted.

Figure 5 shows a radar sensor that includes an analogue to digital converter, ADC, 510 that samples analogue IF signalling 509 according to a sampling rate in order to generate digital signalling 511. As discussed above, the analogue IF signalling 509 can be provided by an analogue front end of the radar sensor, which receives analogue signalling from a radar antenna. The digital signalling comprises a plurality of digital-values.

The radar sensor of Figure 5 also includes a digital processor 512. The digital processor 512 populates a 2-dimensional array of bin-values based on the digital-values. An example of such a 2-dimensional array of bin-values is shown in Figure 2. The digital processor 512 can populate the 2-dimensional array of bin-values with the digital-values of the digital signalling 511 (i.e. the digital-values can be copied directly into the 2-dimensional array without modification). Alternatively, the digital processor 512 can perform some processing on the digital-values of the digital signalling 511 and then populate the 2-dimensional array with the processed digital-values. Either way, a first axis of the 2-dimensional array is a fast time axis prior to the first set of FFTs and a range axis afterwards and a second axis of the 2-dimensional array is a slow time axis prior to the second set of FFTs and a velocity axis at the output. As it is known to somebody skilled in the art, a 2-dimensional FFT is a separable operation and can be split into a set of row-wise FFTs followed by a set of column-wise FFT's or vice versa, the net result is that (range, velocity)-pairs of objects are obtained from the energy peaks that are markedly above the channel noise floor in a 2-dimensional FFT that the radar sensor takes (for single antenna case).

The digital processor 512 can then perform FFT calculations on the bin-values in the 2-dimensional array along the velocity axis in order to determine the velocity 513 of any detected objects. Optionally, the digital processor 512 can also perform FFT calculations on the bin-values in the 2-dimensional array along the fast time axis in order to determine the distance to any detected objects.

The radar sensor of Figure 5 also includes a sampling-rate-adjuster 514. The sampling-rate-adjuster 514 is configured to set a sampling rate associated with the bin-values in the 2-dimensional array based on an index of the slow time axis. As will be discussed in detail below, this can effectively change the position of the detected object in the 2-dimensional array, based on its associated index on the slow time axis, as the length of the frequency axis called range axis becomes slightly dependent on the slow time axis which influences the index that a range of an object needs to be mapped onto. In this way, the FFT calculations along the slow time axis (vertically in Figure 4) captures a greater amount of energy associated with a moving object (because the energy can be moved left or right in the array of Figure 4), thereby reducing the loss of sensitivity for objects that have either a small or have a large range.

The functionality of Figure 5 can be replicated for IF signalling for a plurality of radar antennas, and therefore for a data cube such as the one illustrated in Figure 3. In which case, a radar system can include a plurality of the radar sensors that are shown in Figure 5. The radar system can combine the velocity that is determined by each of the individual radar sensors to determine a combined velocity value for a detected object, and optionally a direction to the detected object.

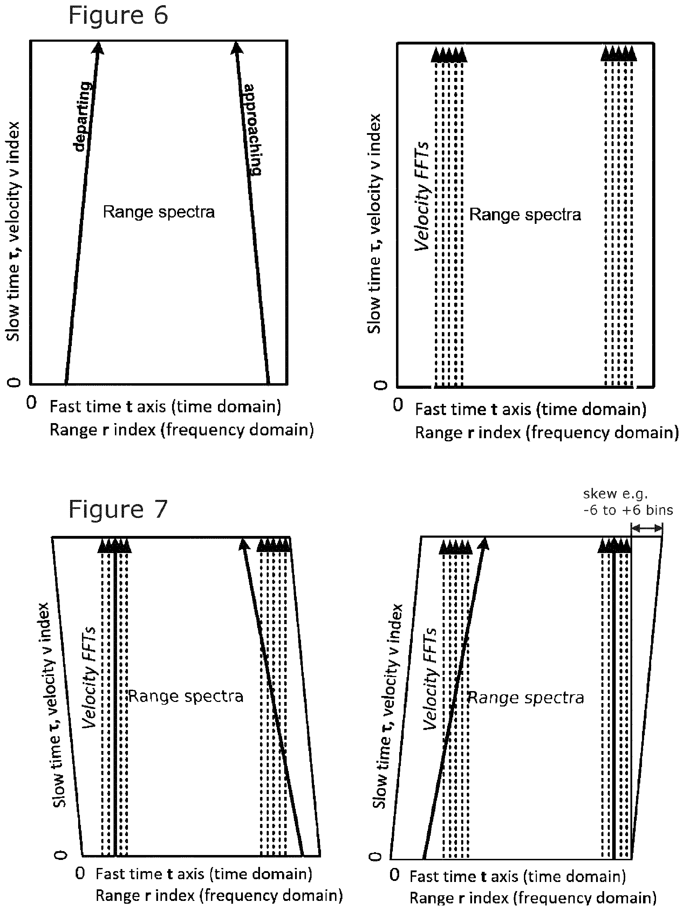

Figure 6 shows a sequence of FMCW range spectra as a function of chirp index, and the range of an object changing as a function of that index over a number of range bins as a result of its (presumed constant) velocity (during the frame). The energy in the 2D range spectra associated with the object is distributed over a number of fast time-columns, hence, bringing the signal strength 'per fast time column' closer to the noise floor, hence, also the peak height after the per-column velocity-FFT closer to the noise level.

Figure 6 illustrates how the energy of an ideal linear motion point object has a linear trajectory across the sequence of successive range measurements per FMCW radar chirp (radar pulse, OFDM radar symbol). The energy in the fast time columns, that is along slow time, already have a lower energy at their input, and hence also produce lower detected peak heights at the FFT output as compared e.g. to a fixed noise floor, impeding detectability of objects e.g. with small radar cross section.

In Figure 6 it is shown how the fact that trajectory of the energy, associated with an ideal object moving at a high velocity, is a line that is angled / twisted away from a purely vertical column can be compensated by a matched reformation of the 2D range support axis.

- Per chirp a small range offset is applied, where the first-to-last chirp difference of these range offsets approximately equals the displacement of the ideal point object during the frame measurement (e.g. 5 or 6 range bins).
- In case of FMCW radar such a slight chirp-index-dependent range offset can be implemented through application of a slight frequency shift per chirp prior to regular digital receiver baseband processing.
- Note, that a beat signal frequency shift over 1 range bin corresponds to a complex-valued phasor signal that performs exactly one rotation over the circle in the complex plane over the $N_{samples}$ ADC samples per chirp.
- The end-to-end frequency beat frequency shift across e.g. 5 or 6 range bins is divided up into $M_{chirps}$ tiny steps in this digital mixer frequency from one chirp to the next.
- According to Nyquist sampling theory, the true shift of the beat signal that results in the range spectrum per chirp is a cyclic shift, as the fast time sample rate remains unchanged, the shift has to be interpreted into a modulo fashion as is customary with Nyquist sampling and is known to people skilled in the art.

Figure 7 shows how a size of the range frequency axis could be maintained, but a slight range shift is applied per chirp, that varies linearly across the sequence of successive chirp measurements, in order to match the trajectory of the (high) velocity of particular interest. In Figure 7, a skew of -6 to +6 bins is approximated by a shift of range indices for objects with the same velocity and direction. However, the processing that is required to implement the functionality that is represented by Figure 7 for the whole scale of high velocities, resp. performing all skews between -6 and +6 bins from the example, is complex and requires a large amount of computer memory. Figure 7 does not involve any change in the sampling rate. Less compute power and memory is required, if a few use cases are picked out, e.g. including a worst case for maximum velocity of an approaching object.

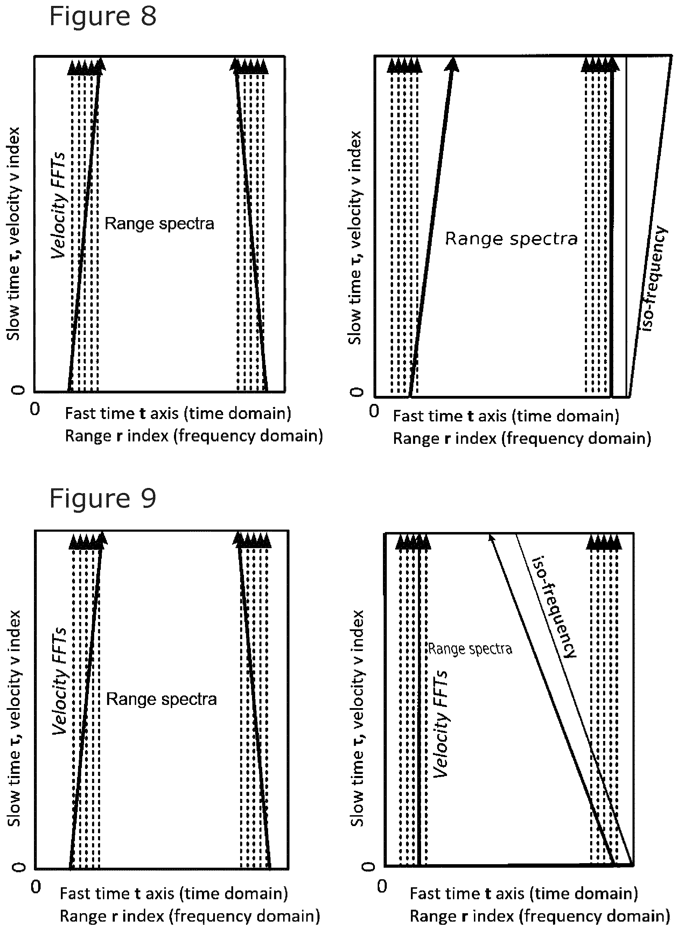

Figure 8 schematically shows how the length of the (unambiguous) range axis can be slightly (linearly) stretched in order to match the ratio d÷r of objects of high interest. The "d÷r of objects of high interest" is an example of a targeted range / velocity ratio. E.g. objects at the maximum unambiguous range $r^+$ and at the maximum unambiguous velocity $v^+$ (or a multiple thereof, extracted though disambiguation techniques known to people skilled in the art of radar receiver techniques).

Instead of applying a different range-, resp. frequency shift from one chirp to the next (as shown in Figure 7) the length of the range axis per chirp is slightly moved from one chirp to the next, in order to match trajectory of objects of particular interest with a given ratio of displacement and range d÷r. This is equivalent to these objects having a particular ratio of velocity and range v/r. Observe that the stretching factor of the range axis has a larger absolute effect at larger range values as compared to small range values. In this way, the beneficial effect of the method of the present disclosure as it is shown in Figure 8 is focussed on a combination of objects at high range, hence, experiencing large two-way radio propagation loss from the radar transmit antennas to the radar object and back to the radar receive antennas, and significant smearing of the received signal energy associated with the radar object across a number of successive range bins, thus impeding detectability of the object relative to a channel noise floor.

Figure 9 schematically shows how the length of the (unambiguous) range axis can be slightly (linearly) compressed in order to match the ratio d÷r of objects of high interest.

In this example, benefits are realised for departing objects that have a high relative velocity and a small range. This is instead of objects that have a combination of high relative velocity and high range, as is shown in Figure 8. For Figure 9, a fixed cyclic rotation of the range axis is applied for all chirps in order to convert the small range of objects into a larger range, followed by unaltered application of the method that is described above. The same principle also holds for negative relative velocities.

It will be appreciated that the functionality of the compression of the range-velocity (RV) plane at the upper velocity indexes in Figure 9 can also be implemented by stretching the RV plane for the lower velocity indexes. Similarly, the functionality of the stretching of the RV plane at the upper velocity indexes in Figure 9 can also be implemented by compressing the RV plane for the lower velocity indexes.

When a signal is sampled by the ADC in the way that is described above, the frequency content scales linearly with the time base. When a sine wave is sampled, the sampled signal y is:

$$y = A * sin(2 * \pi * t * f) \qquad Equation\ 1$$

Where *A* is the amplitude, *t* is the sampling time (an integer multiple of sampling time Ts) and *f* the frequency. From this equation, scaling the time vector results to the same effect as scaling the frequency vector:

$$t(1 - \partial) \ has \ the \ same \ effect \ as \ f(1 - \partial) \qquad Equation \ 2$$

The time scaling assumes that the ADC time is scaled (*t*(1 - *∂*)), while the time base for further FFT processing is kept constant.

The range calculation shows that the range R is linear with the resulting baseband frequency $\Delta f$ (2):

$$\Delta f = \frac{2R\left(\frac{d(f)}{d(t)}\right)}{c_0} \qquad Equation \ 3$$

Where $\frac{d(f)}{d(t)}$ equals the frequency slope of the chirp.

Equation 2 shows that changing the time-base of sampling, scales the frequency linearly. This means that when the sampling time base is changed from sampling time *Ts* to *Ts*(1 - *∂*), the $\Delta f$ on the sample time *Ts* will change as:

$$\Delta f_{Ts(1-\partial)} = \frac{2R\left(\frac{d(f)}{d(t)}\right)}{c_0}(1 - \partial) \qquad Equation \ 4$$

The equation shows that scaling the time base has the same effect as scaling the chirp frequency slope $\frac{d(f)}{d(t)}$ with the same scale *Ts*. Scaling *Ts* means scaling the ADC clock rate which requires a dynamically adjustable phase locked loop (PLL); i.e., extra hardware. The chirp slope typically can be set dynamically from chirp to chirp with high accuracy, via a multi-bit programmable divider register of the chirp generator PLL. Furthermore, examples that will be described below can readily compensate for non-linear blur effects as well as linear motion blur. Such non-linear blur effects can include higher order, cycle and noisy blur effects, which can be compensated for by adapting the chirp slope for the different indices on the slow-time axis / chirp index.

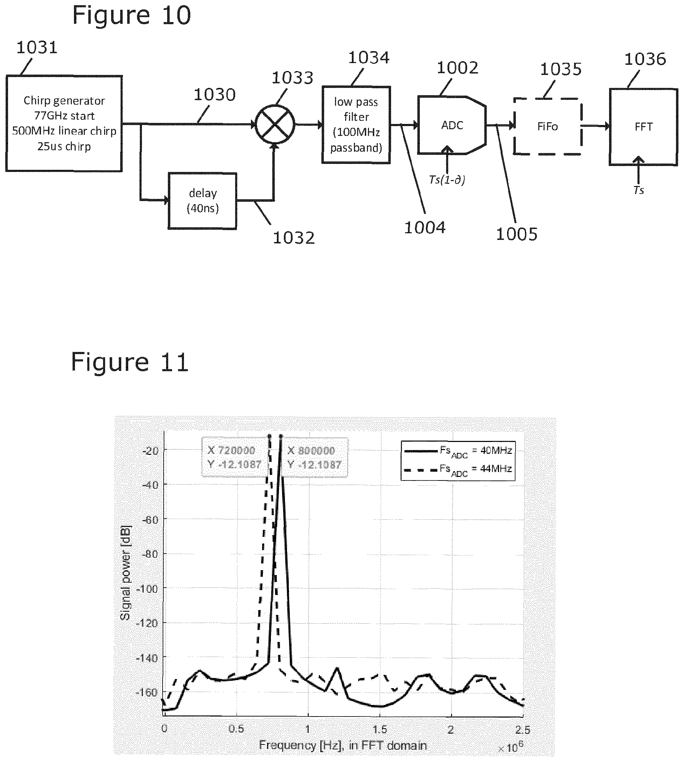

Figure 10 provides an overview of a simulation setup for a system such as the one that is described above in which the sampling rate that is associated with the bin values in the 2-dimensional array is adjusted. This can be considered as a system with a decoupled ADC sample clock and FFT clock.

A chirp generator 1031 generates a sequence of radar chirps 1030. A mixer 1033 multiplies the sequence of radar chirps 1030 with a delayed version of the sequence (FMCW radar principle). The delay in this simulation is 40ns, mimicking a distance (R) of ~6 metres. A low pass filter 1034 filters off the high frequency content to provide analogue intermediate frequency (IF) signalling 1004, which is sampled & digitized by an ADC 1002 on a Ts(1-*∂*) time base in order to generate digital signalling 1005. An FFT block 1036 performs an FFT on the digital signalling 105 using the original Ts time base. Optionally, a FiFo (first-in, first-out) memory module 1035 can be used to transfer data from one time base to the other time base.

Figure 11 shows a plot that illustrates the spectral impact of ADC clock rate adaptation that can be performed by the simulation setup of Figure 10 for a single target.

When $Fs_{ADC}$ and $Fs_{FFT}$ are equal and 40MHz, the $$\Delta f_{FFT} = \Delta f_{ADC} = \left(\frac{d(f)}{d(t)} * 40ns\right) = 800\text{kHz}$$ . This is shown by the solid line in Figure 11.

If the ADC sample time $Ts_{ADC}$ is decreased by 10% (*∂* = 0.1), then the ADC sample rate $Fs_{ADC}$ = 44,444MHz. According to Equation 4, $\Delta f_{FFT}$ will become 720kHz, which is shown by the dashed line in Figure 11. This effect is used in the system that is illustrated in Figure 10.

In the system of Figure 10, a fractional PLL may be used to provide a flexible clock to the ADC 1002, while maintaining phase noise requirements for this clock. This can add hardware complexity. Also, the sample rate between the ADC output and FFT engine 1036 is mis-aligned, such that additional circuitry (such as the FiFo 1035) may be used to connect the data streams.

Examples of the present disclosure that are provided below can achieve the same effect of Equation 4. However,

the chirp slope, $\dfrac{d(f)}{d(t)}$ , of the radar chirps can be altered instead of, or in addition to, changing the time base.

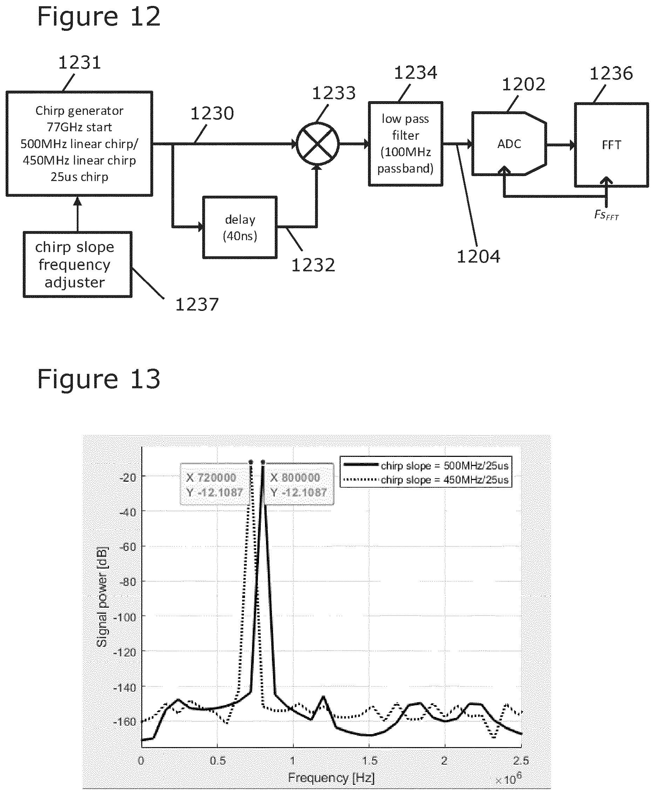

Figure 12 shows an example embodiment of a radar sensor according to the present disclosure. The radar sensor includes a chirp generator 1231, a mixer 1233, an ADC 1202 and a digital processor 1236.

The chirp generator 1231 provides radar signalling 1230 for transmission. As discussed above, this radar signalling 1230 includes a sequence of radar chirps. Each radar chirp has a chirp slope that defines the rate of change of frequency in the radar chirp, such that the radar sensor can provide the functionality of a Frequency Modulated Continuous Wave (FMCW) radar system. As discussed above, a complete sequence of radar chirps can be processed to provide a frame of FMCW radar baseband samples.

The mixer 1233 multiplies the transmitted radar signalling 1230 with a received version 1232 of the transmitted radar signalling that has been reflected from any detected objects in order to provide analogue intermediate frequency, IF, signalling 1204. In this example, a low pass filter 1234 processes the signalling that is directly provided by the mixer 1233 such that the low pass filter 1234 provides the analogue intermediate frequency, IF, signalling 1204.

The ADC 1202 samples the analogue intermediate frequency, IF, signalling 1204 in order to generate digital signalling 1205. The digital signalling 1205 includes a plurality of digital-values.

The digital processor 1236 populates a 2-dimensional array of bin-values based on the digital-values of the digital signalling 1205, such that (as shown in Figure 2): a first axis of the 2-dimensional array is a fast time axis and a second axis of the 2-dimensional array is a slow time axis. The digital processor 1236 then performs DFT calculations on the bin-values in the 2-dimensional array along the fast time axis and the slow time axis in order to determine the range and velocity of any detected objects.

The radar sensor of Figure 12 also includes a chirp slope frequency adjuster 1237 that sets the chirp slope of the radar chirps based on an index in the sequence of radar chirps (which corresponds to a corresponding index of the slow time axis). That is, the chirp slope frequency adjuster 1237 can provide a signal to the chirp generator 1231 such that the chirp slope of each radar chirp is set based on its corresponding index of the slow time axis. The corresponding index of the slow time axis can also be considered as an index in the sequence of radar chirps that are provided by the chirp generator 1231. Therefore, the chirp slope frequency adjuster 1237 can set the chirp slope of for the chirps within a single frame (2-dimensional array) to different values. The chirp slope frequency adjuster 1237 can set the chirp slope of the radar chirps based on the index in the sequence of radar chirps such that the difference between the chirp slope for consecutive chirps in the sequence is less than that of a bin in the fast time axis of the 2-dimensional array of bin-values. In some examples it can be less that 50%, 25%, 10% or 5% of a bin in the fast time axis of the 2-dimensional array of bin-values. Also, the sequence of radar chirps in a single frame can be relatively long, in that can include at least 128 chirps, at least 256 chirps, at least 512 chirps, or at least 1024 chirps. As will be discussed below, various different functions can be applied to the corresponding indices of the slow time axis when setting the chirp slope of the radar chirps.

The functionality of the chirp slope frequency adjuster 1237 is shown separately to the chirp generator 1231 in Figure 12. However, it will be appreciated that the functionality of the chirp slope frequency adjuster 1237 could be incorporated into the chirp generator 1231.

It can be seen from Figure 12 that the ADC 1202 and the FFT functionality in the digital processor 1236 have the same time base. This is an implementation advantage when compared with the system of Figure 10, which uses two different time bases. In Figure 12, it is not required for the ADC 1202 and the FFT to have exactly the same clock; what is important is that the time base relation remains fixed. The chirp slope however can be set to different values for different chirps by altering $\dfrac{d(f)}{d(t)}$ .

In the example of Figure 10, the ADC time base was decreased by $\partial = 0.1$. To get the same effect for the system of Figure 12, the numerator, $\dfrac{d(f)}{d(t)}$ needs to be decreased with the same amount: 500M*Hz*/25*us* * (1 - $\partial$) = 450*MHz*/25*us.* According to Equation 3, $\Delta f$ becomes 720kHz.

Figure 13 shows a plot that illustrates the spectral impact of the chirp slope adaptation that can be performed by the simulation of Figure 12, again for a single target. The solid line represents the original slope, the dotted line represents the adapted chirp slope, where the resulting frequency becomes 720kHz. By comparing the plots of Figures 11 and 13, it can be seen that the system of Figure 12 can provide the same functionality as the system of Figure 10.

To prove that the systems of Figures 10 and 12 can provide the same effect for multiple targets, the systems of Figures 10 and 12 were simulated for four targets. This is simulated by including 4 delay paths in each system, which are be added together before mixing.

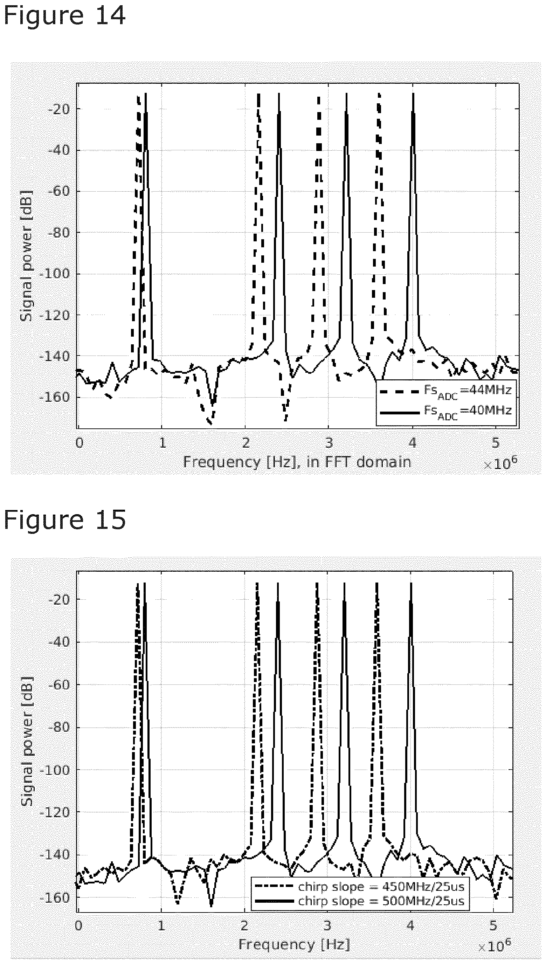

Figure 14 shows the results for the system of Figure 10 for four targets, when using a different ADC sample rate. All tones are scaled to a lower frequency with a factor of 0.9.

Figure 15 shows the results for the system of Figure 12 for four targets, when the time base is kept the same between ADC and FFT and the chirp slope is scaled down with 0.9 to 450HMz/25us. It can be seen that the results for the system of Figure 12 (as shown in Figure 15) are identical to those for the system of Figure 10 that applies an ADC clock shift (as shown in Figure 14).

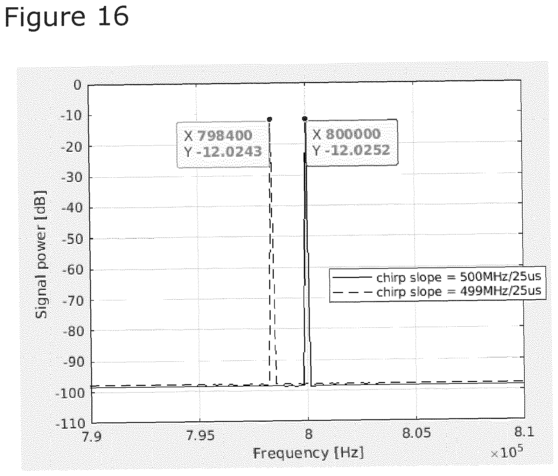

Figure 16 shows an example of the spectral impact of chirp slope adaption for a relatively small slope adaptation ($\partial$ =0.2%). The removal of motion blur typically needs only a relatively small adaptation (sub-percent). The chirp slope $\frac{d(f)}{d(t)}$ is decreased by 0.2%: $500MHz/25us * (1 - 0.002) = 499MHz/25us$. According to Equation 3, $\Delta f$ becomes 1.6kHz.

As indicated above, embodiments of the present disclosure can remove or reduce motion blur which is caused by effects other than a constant velocity delta between a detected object and the radar transceiver.

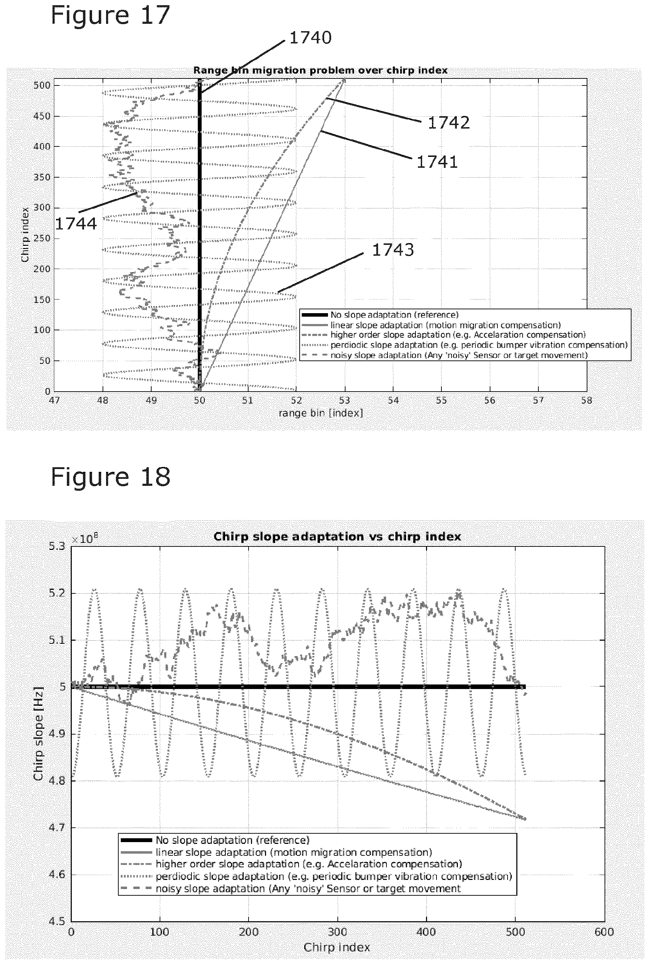

Figure 17 shows range migration issues for several types of displacement profiles (motion, acceleration, periodic movement, noisy / stochastic movement). Figure 17 shows a plot of range bin / index on the horizontal axis versus chirp index on the vertical axis.

By way of a reference, Figure 17 shows a reference line 1740 for which no slope adaptation is required because the determined range is constant across the chirp index. No motion blur occurs in such a scenario.

A fixed slope adaptation (as shown in Figure 17 with line 1741) can solve motion blur of an object moving with a constant velocity in the distance - velocity graph. In the figure, multiple chirps are executed and processed, where the horizontal axis is the result of the FFT results per chirp (distance estimation, or 'fast time'), and the vertical axis shows the results of a vertical FFTs over all the individual chirps (velocity estimation, or 'slow time'). When an object moves with respect to the radar transceiver during the 'slow time' it gives a linear motion blur, which can be corrected by a linear slope adaptation.

That is, the chirp slope frequency adjuster can set the chirp slope of the radar chirps based on the corresponding index of the slow time axis by applying a linear function to the index of the slow time axis.

The ability to reduce motion blur is not only applicable to an object moving with a constant velocity (line 1741 in Figure 17), but also other corrections including non-linear ones. That is, the chirp slope frequency adjuster can set the chirp slope of the radar chirps based on the corresponding index of the slow time axis by applying a non-linear function to the index of the slow time axis. Such non-linear corrections include:

- an object moving with a constant acceleration / deceleration with respect to the radar transceiver (dash-dotted curve 1742 in Figure 17). In which case, for instance, the chirp slope frequency adjuster can set the chirp slope of the radar chirps by applying a parabolic function to the corresponding index of the slow time axis;

- a repeating movement between an object and the radar transceiver, for example when radar transceiver is mounted on a rotating object (e.g. the wheel of the car) or an object that vibrates with a relatively consistent frequency (dotted curve 1743 in Figure 17). In which case, for instance, the chirp slope frequency adjuster can set the chirp slope of the radar chirps by applying an oscillating function to the corresponding index of the slow time axis.

- a 'stochastic / noisy movement' between an object and the radar transceiver, for example when the radar sensor is mounted on a vibrating bumper (an example of a noisy movement profile is shown as a dashed curve 1744 in Figure 17). In which case, for instance, the chirp slope frequency adjuster can set the chirp slope of the radar chirps by applying a stochastic / noisy function to the index of the corresponding slow time axis. When such a movement is known, it can be compensated.

- Any known artefact that lowers the SNR of the radar system, by compensating it by slope modulation. It could be a combination (for example a linear combination) of any of the effects that are disclosed herein.

Any known object migration can be compensated for such that the range - velocity profile can be brought back to the thick black curve 1740 shown in Figure 17 (which can be optimal for a certain velocity/distance range). Figure 18 shows the corresponding correction signals, one for each of the plots in Figure 17, as a slope adaptation vs chirp index.

A range where the compensation is most optimal can be selected by choosing an appropriate chirp slope adaptation, in some examples by selecting one of a plurality of predetermined functions for applying to the index of the corresponding slow time axis. It could be chosen such as to optimize for the range where the radar system has difficulties determining range and velocities (typically large range in combination with large velocity). That is, the chirp slope frequency adjuster can set the chirp slope of the radar chirps based on: (i) the index of the slow time axis; and (ii) a targeted range / velocity ratio. Furthermore, the chirp slope frequency adjuster can set the chirp slope of the radar chirps such that the chirp slope for the maximum index of the slow time axis corresponds to a maximum range / maximum velocity of the radar sensor.

In some examples, any of the radar sensors disclosed herein can receive a control signal such that the chirp slope frequency adjuster can set the chirp slope of the radar chirps by applying one of a plurality of predetermined functions to the corresponding index of the slow time axis based on the control signal. That is, the control signal can represent which one of the plurality of predetermined functions should be applied by the chirp slope frequency adjuster, or the control signal can be processed such that a determination as to which of the plurality of predetermined functions should be applied can be made. For instance, the control signal can represent an operational characteristic of an automobile to which the radar sensor is fitted. The control signal can be a sensed signal that represents a sensed operational characteristic of the automobile and / or it can be provided by a controller of the automobile (for instance based on a control signal that is used to directly control operation of the automobile). By way of example, the operational characteristic can be the speed of the automobile. By way of another example, the operational characteristic can be representative of an oscillation that is associated with a component of the automobile to which the radar sensor is fitted (e.g. a bumper).

Examples disclosed herein can apply any combinations of these techniques, or other slope adaption techniques, to improve the signal to noise ratio (SNR) of a received radar signal in a velocity/distance region of interest. This includes a combination of the examples that set the chirp slope of the radar chirps based on the corresponding index of the slow axis and the examples that set a sampling rate associated with the bin-values in the 2-dimensional array based on an index of the slow time axis.

A benefit of changing the chirp slope is that the clock rate of the ADC can be generated by a 'simple' integer PLL, while changing the chirp slope in an FMCW system typically can be done accurately by changing a digital control word in the chirp PLL. That is, the chirp slope frequency adjuster can set the chirp slope of the radar chirps by setting the value of the digital control word that controls the chirp slope of the radar chirps. In some examples, the digital control word can be a 32-bit word, and therefore it allows for precise setting of the chirp slope. Furthermore, use of such a digital control word advantageously does not need any hardware adaptation. Another benefit is that the clock relations between the ADC and the FFT are fixed, so no FiFo is required.

A radar system can be provided that includes a plurality of the radar sensors that are disclosed herein. Such a radar system can combine the velocity that is determined by each of the radar sensors to determine: a combined velocity value for a detected object, and optionally a direction to the detected object. Beneficially, the implementation cost does not depend on the number of antennas, so it easily scalable.

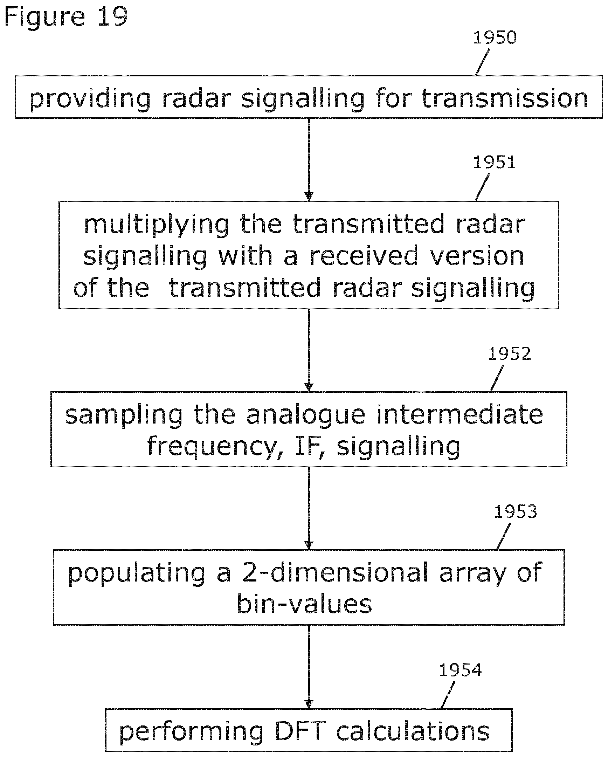

Figure 19 schematically illustrates a computer-implemented method of determining the velocity of a detected object.

At step 1950, the method incudes providing radar signalling for transmission. As discussed above, the radar signalling comprises a sequence of radar chirps, and each radar chirp has a chirp slope that defines the rate of change of frequency in the radar chirp. The chirp slope of the radar chirps is set based on an index in the sequence of radar chirps. Each of the chirps in the sequence will be processed to provide 2-dimensional array / frame of digital-values.

At step 1951, the method involves multiplying the transmitted radar signalling with a received version of the transmitted radar signalling that has been reflected from any detected objects in order to provide analogue intermediate frequency, IF, signalling.

At step 1952, the method involves sampling the analogue intermediate frequency, IF, signalling in order to generate digital signalling. The digital signalling comprises a plurality of digital-values.

At step 1953, the method involves populating a 2-dimensional array of bin-values based on the digital-values, such that: a first axis of the 2-dimensional array is a fast time axis and a second axis of the 2-dimensional array is a slow time axis.

At step 1954, the method involves performing DFT calculations on the bin-values in the 2-dimensional array along the fast time axis and the slow time axis in order to determine the range and velocity of any detected objects.

The instructions and/or flowchart steps in the above figures can be executed in any order, unless a specific order is explicitly stated. Also, those skilled in the art will recognize that while one example set of instructions/method has been discussed, the material in this specification can be combined in a variety of ways to yield other examples as well, and are to be understood within a context provided by this detailed description.

In some example embodiments the set of instructions/method steps described above are implemented as functional and software instructions embodied as a set of executable instructions which are effected on a computer or machine which is programmed with and controlled by said executable instructions. Such instructions are loaded for execution on a processor (such as one or more CPUs). The term processor includes microprocessors, microcontrollers, processor modules or subsystems (including one or more microprocessors or microcontrollers), or other control or computing devices. A processor can refer to a single component or to plural components.

In other examples, the set of instructions/methods illustrated herein and data and instructions associated therewith are stored in respective storage devices, which are implemented as one or more non-transient machine or computer-readable or computer-usable storage media or mediums. Such computer-readable or computer usable storage medium or media is (are) considered to be part of an article (or article of manufacture). An article or article of manufacture can refer to any manufactured single component or multiple components. The non-transient machine or computer usable media or mediums as defined herein excludes signals, but such media or mediums may be capable of receiving and processing information from signals and/or other transient mediums.

Example embodiments of the material discussed in this specification can be implemented in whole or in part through network, computer, or data based devices and/or services. These may include cloud, internet, intranet, mobile, desktop, processor, look-up table, microcontroller, consumer equipment, infrastructure, or other enabling devices and services. As may be used herein and in the claims, the following non-exclusive definitions are provided.

In one example, one or more instructions or steps discussed herein are automated. The terms automated or automatically (and like variations thereof) mean controlled operation of an apparatus, system, and/or process using computers and/or mechanical/electrical devices without the necessity of human intervention, observation, effort and/or decision.

It will be appreciated that any components said to be coupled may be coupled or connected either directly or indirectly. In the case of indirect coupling, additional components may be located between the two components that are said to be coupled.

In this specification, example embodiments have been presented in terms of a selected set of details. However, a person of ordinary skill in the art would understand that many other example embodiments may be practiced which include a different selected set of these details. It is intended that the following claims cover all possible example embodiments.

**Claims**

1. A radar sensor comprising:

   a chirp generator that is configured to provide radar signalling for transmission, wherein the radar signalling comprises a sequence of radar chirps, and wherein each radar chirp has a chirp slope that defines the rate of change of frequency in the radar chirp;

   a mixer that is configured to multiply the transmitted radar signalling with a received version of the transmitted radar signalling that has been reflected from any detected objects in order to provide analogue intermediate frequency, IF, signalling;

   an analogue to digital converter, ADC, that is configured to sample the analogue intermediate frequency, IF, signalling in order to generate digital signalling, wherein the digital signalling comprises a plurality of digital-values;

   a digital processor that is configured to populate a 2-dimensional array of bin-values based on the digital-values, such that: a first axis of the 2-dimensional array is a fast time axis and a second axis of the 2-dimensional array is a slow time axis;

   a chirp slope frequency adjuster that is configured to set the chirp slope of the radar chirps based on an index in the sequence of radar chirps; and

   wherein the digital processor is further configured to perform discrete Fourier transform, DFT, calculations on the bin-values in the 2-dimensional array along the fast time axis and the slow time axis in order to determine the range and velocity of any detected objects.

2. The radar sensor of claim 1, wherein the chirp slope frequency adjuster is configured to set the chirp slope of the radar chirps based on the index in the sequence of radar chirps such that the difference between the chirp slope for consecutive chirps in the sequence is less than that of a bin in the fast time axis of the 2-dimensional array of bin-values, optionally less that 50%, 25%, 10% or 5% of a bin in the fast time axis of the 2-dimensional array of bin-values.

3. The radar sensor of claim 1 or claim 2, wherein the sequence of radar chirps comprises at least 128 chirps, at least 256 chirps, at least 512 chirps, or at least 1024 chirps.

4. The radar sensor of any preceding claim, wherein the chirp slope frequency adjuster is configured to set the chirp slope of the radar chirps based on the corresponding index of the slow time axis, by applying a linear function to the index of the slow time axis to set the chirp slope.

5. The radar sensor of any of claims 1 to 3, wherein the chirp slope frequency adjuster is configured to set the chirp slope of the radar chirps based on the corresponding index of the slow time axis, by applying one or more of:

a non-linear function to the index of the slow time axis to set the chirp slope;
a parabolic function to the corresponding index of the slow time axis to set the chirp slope;
an oscillating function to the corresponding index of the slow time axis to set the chirp slope; and
a stochastic function to the index of the corresponding slow time axis to set the chirp slope.

6. The radar sensor of any preceding claim, wherein:

the radar sensor is configured to receive a control signal; and
the chirp slope frequency adjuster is configured to set the chirp slope of the radar chirps by applying one of a plurality of predetermined functions to the corresponding index of the slow time axis based on the control signal.

7. The radar sensor of claim 6, wherein the control signal represents an operational characteristic of an automobile to which the radar sensor is fitted.

8. The radar sensor of claim 7, wherein the control signal is a sensed signal that represents a sensed operational characteristic of the automobile.

9. The radar sensor of claim 7 or claim 8, wherein the operational characteristic is:

the speed of the automobile; and / or
representative of an oscillation that is associated with a component of the automobile to which the radar sensor is fitted.

10. The radar sensor of claim 1, wherein the chirp slope frequency adjuster is configured to set the chirp slope of the radar chirps based on: (i) the index of the slow time axis; and (ii) a targeted range / velocity ratio.

11. The radar sensor of claim 1, wherein:
the chirp slope frequency adjuster is configured to set the chirp slope of the radar chirps such that the chirp slope for the maximum index of the slow time axis corresponds to a maximum range / maximum velocity of the radar sensor.

12. The radar sensor of any preceding claim, wherein:
the mixer is configured to multiply the received version of the transmitted radar signalling by both: a 2-dimensional beat signal that represents a predetermined constant velocity; and the transmitted radar signalling, in order to provide the analogue intermediate frequency, IF, signalling.

13. The radar sensor of any preceding claim, wherein the chirp slope frequency adjuster is configured to set the chirp slope of the radar chirps by setting the value of a digital control word that controls the chirp slope of the radar chirps.

14. The radar sensor of any preceding claim, wherein the ADC and the digital processor have time bases that are in a fixed relationship with reference to each other.

15. A computer-implemented method of determining the velocity of a detected object, the method comprising:

providing radar signalling for transmission, wherein the radar signalling comprises a sequence of radar chirps, wherein each radar chirp has a chirp slope that defines the rate of change of frequency in the radar chirp, and wherein the chirp slope of the radar chirps is set based on an index in the sequence of radar chirps;
multiplying the transmitted radar signalling with a received version of the transmitted radar signalling that has been reflected from any detected objects in order to provide analogue intermediate frequency, IF, signalling;
sampling the analogue intermediate frequency, IF, signalling in order to generate digital signalling, wherein the digital signalling comprises a plurality of digital-values;
populating a 2-dimensional array of bin-values based on the digital-values, such that: a first axis of the 2-dimensional array is a fast time axis and a second axis of the 2-dimensional array is a slow time axis; and
performing DFT calculations on the bin-values in the 2-dimensional array along the fast time axis and the slow time axis in order to determine the range and velocity of any detected objects.

**Amended claims in accordance with Rule 137(2) EPC.**

1. A radar sensor comprising:

a chirp generator (1231) that is configured to provide radar signalling for transmission, wherein the radar signalling comprises a sequence of radar chirps (1230), and wherein each radar chirp has a chirp slope that defines the rate of change of frequency in the radar chirp;
a mixer (1233) that is configured to multiply the transmitted radar signalling (1230) with a received version (1232) of the transmitted radar signalling that has been reflected from any detected objects in order to provide analogue intermediate frequency, IF, (1204) signalling;
an analogue to digital converter, ADC, (1202) that is configured to sample the analogue intermediate frequency, IF, signalling in order to generate digital signalling (1205), wherein the digital signalling comprises a plurality of digital-values;
a digital processor (103) that is configured to populate a 2-dimensional array (206) of bin-values based on the digital-values, such that: a first axis of the 2-dimensional array is a fast time axis and a second axis of the 2-dimensional array is a slow time axis;
a chirp slope frequency adjuster that is configured to set the chirp slope of the radar chirps (1230) based on an index in the sequence of radar chirps; and
wherein the digital processor (103) is further configured to perform discrete Fourier transform, DFT, calculations on the bin-values in the 2-dimensional array (206) along the fast time axis and the slow time axis in order to determine the range and velocity of any detected objects, wherein
the chirp slope frequency adjuster (1237) is configured to set the chirp slope of the radar chirps (1230) based on a corresponding index of the slow time axis, by applying one or more of:

a non-linear function to the index of the slow time axis to set the chirp slope;
a parabolic function (1742) to the corresponding index of the slow time axis to set the chirp slope;
an oscillating function (1743) to the corresponding index of the slow time axis to set the chirp slope; and
a stochastic function (1744) to the index of the corresponding slow time axis to set the chirp slope.

2. The radar sensor of claim 1, wherein the chirp slope frequency adjuster (1237) is configured to set the chirp slope of the radar chirps (1230) based on the index in the sequence of radar chirps such that the difference between the chirp slope for consecutive chirps in the sequence is less than that of a bin in the fast time axis of the 2-dimensional array (206) of bin-values, optionally less than 50%, 25%, 10% or 5% of a bin in the fast time axis of the 2-dimensional array of bin-values.

3. The radar sensor of claim 1 or claim 2, wherein the sequence of radar chirps (1230) comprises at least 128 chirps, at least 256 chirps, at least 512 chirps, or at least 1024 chirps.

4. The radar sensor of any preceding claim, wherein:

the radar sensor is configured to receive a control signal; and
the chirp slope frequency adjuster (1237) is configured to set the chirp slope of the radar chirps (1230) by applying one of a plurality of predetermined functions to the corresponding index of the slow time axis based on the control signal.

5. The radar sensor of claim 4, wherein the control signal represents an operational characteristic of an automobile to which the radar sensor is fitted.

6. The radar sensor of claim 5, wherein the control signal is a sensed signal that represents a sensed operational characteristic of the automobile.

7. The radar sensor of claim 5 or claim 6, wherein the operational characteristic is:

the speed of the automobile; and / or
representative of an oscillation that is associated with a component of the automobile to which the radar sensor is fitted.

8. The radar sensor of claim 1, wherein the chirp slope frequency adjuster (1237) is configured to set the chirp slope (1230) of the radar chirps based on: (i) the index of the slow time axis; and (ii) a targeted range / velocity ratio.

9. The radar sensor of claim 1, wherein:
the chirp slope frequency adjuster (1237) is configured to set the chirp slope of the radar chirps (1230) such that the chirp slope for the maximum index of the slow time axis corresponds to a maximum range / maximum velocity of the radar sensor.

10. The radar sensor of any preceding claim, wherein:
The mixer (1233) is configured to multiply the received version (1232) of the transmitted radar signalling (1230) by both: a 2-dimensional beat signal that represents a predetermined constant velocity; and the transmitted radar signalling, in order to provide the analogue intermediate frequency, IF, (1204) signalling.

11. The radar sensor of any preceding claim, wherein the chirp slope frequency adjuster (1237) is configured to set the chirp slope of the radar chirps (1230) by setting the value of a digital control word that controls the chirp slope of the radar chirps.

12. The radar sensor of any preceding claim, wherein the ADC (510) and the digital processor (512) have time bases that are in a fixed relationship with reference to each other.

13. A computer-implemented method of determining the velocity of a detected object, the method comprising:

Providing (1950) radar signalling for transmission, wherein the radar signalling comprises a sequence of radar chirps, wherein each radar chirp has a chirp slope that defines the rate of change of frequency in the radar chirp, and wherein the chirp slope of the radar chirps is set based on an index in the sequence of radar chirps;
Multiplying (1951) the transmitted radar signalling with a received version of the transmitted radar signalling that has been reflected from any detected objects in order to provide analogue intermediate frequency, IF, signalling;
sampling (1952) the analogue intermediate frequency, IF, signalling in order to generate digital signalling, wherein the digital signalling comprises a plurality of digital-values;
populating (1953) a 2-dimensional array of bin-values based on the digital-values, such that: a first axis of the 2-dimensional array is a fast time axis and a second axis of the 2-dimensional array is a slow time axis; and
performing (1954) DFT calculations on the bin-values in the 2-dimensional array along the fast time axis and the slow time axis in order to determine the range and velocity of any detected objects; wherein
the chirp slope frequency adjuster is configured to set the chirp slope of the radar chirps based on a corresponding index of the slow time axis, by applying one or more of:

a non-linear function to the index of the slow time axis to set the chirp slope;
a parabolic function to the corresponding index of the slow time axis to set the chirp slope;
an oscillating function to the corresponding index of the slow time axis to set the chirp slope; and
a stochastic function to the index of the corresponding slow time axis to set the chirp slope.

# Figure 1

132

received
signalling

101

102

103

Chirp
generator

Analogue
frontend

ADC

Digital
processing

131

130

104

105

# Figure 2

206

velocity (slow) axis

range (fast) axis

# Figure 3

307

velocity (slow) axis

range (fast) axis

spatial
sampling

## Figure 4

406

408

The 2nd FFT captures only part of the
energy of the object! → sensitivity loss

Slow time – chirp index (before the 2nd FFT)

Different chirps
see the same
object at different
location

Range (after 1st FFT)

## Figure 5

510

512

beat
signalling
(509)

ADC

digital
signalling
(511)

Digital
processor

velocity
(513)

Sampling-rate-
adjuster

514

## Figure 6

Slow time τ, velocity v index

departing

approaching

Range spectra

0

0 Fast time t axis (time domain)
Range r index (frequency domain)

Slow time τ, velocity v index

Velocity FFTs

Range spectra

0

0 Fast time t axis (time domain)
Range r index (frequency domain)

## Figure 7

Slow time τ, velocity v index

Velocity FFTs

Range spectra

0

0 Fast time t axis (time domain)
Range r index (frequency domain)

skew e.g.
-6 to +6 bins

Slow time τ, velocity v index

Velocity FFTs

Range spectra

0

0 Fast time t axis (time domain)
Range r index (frequency domain)

# Figure 8

# Figure 9

## Figure 10

## Figure 11

# Figure 12

1231

1230

1233

1234

1202

1236

Chirp generator
77GHz start
500MHz linear chirp/
450MHz linear chirp
25us chirp

delay
(40ns)

low pass
filter
(100MHz
passband)

ADC

FFT

chirp slope
frequency
adjuster

1237

1232

1204

$Fs_{FFT}$

# Figure 13

## Figure 14

## Figure 15

Figure 16

# Figure 17

# Figure 18

Figure 19

1950

providing radar signalling for transmission

1951

multiplying the transmitted radar
signalling with a received version
of the  transmitted radar signalling

1952

sampling the analogue intermediate
frequency, IF, signalling

1953

populating a 2-dimensional array of
bin-values

1954

performing DFT calculations

Europäisches
Patentamt
European
Patent Office
Office européen
des brevets

# EUROPEAN SEARCH REPORT

Application Number

EP 22 20 7713

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2020/023248 A1 (QUALCOMM INC [US]) 30 January 2020 (2020-01-30) * abstract; figures 6A-16 * * paragraph [0107] – paragraph [0152] * ----- | 1-4,6, 11,13-15 | INV. G01S7/35 G01S13/34 G01S13/58 G01S13/931 |
| X | US 10 855 328 B1 (GULATI KAPIL [US] ET AL) 1 December 2020 (2020-12-01) * abstract; figures 2, 5-7 * * column 4, line 53 – column 5, line 18 * * column 10, line 19 – column 11, line 46 * ----- | 1,15 | |
| A | EP 3 165 941 B1 (INFINEON TECHNOLOGIES AG [DE]) 26 May 2021 (2021-05-26) * abstract; figures 1-9 * ----- | 1-15 | |

| TECHNICAL FIELDS SEARCHED (IPC) |
|---|
| G01S |

The present search report has been drawn up for all claims

| Place of search | Date of completion of the search | Examiner |
|---|---|---|
| Munich | 26 April 2023 | López de Valle, J |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 22 20 7713

This annex lists the patent family members relating to the patent documents cited in the above-mentioned European search report.
The members are as contained in the European Patent Office EDP file on
The European Patent Office is in no way liable for these particulars which are merely given for the purpose of information.

26-04-2023

| Patent document cited in search report | | Publication date | Patent family member(s) | | Publication date |
|---|---|---|---|---|---|
| WO 2020023248 | A1 | 30-01-2020 | CN | 112513668 A | 16-03-2021 |
| | | | EP | 3827276 A1 | 02-06-2021 |
| | | | US | 2020033442 A1 | 30-01-2020 |
| | | | WO | 2020023248 A1 | 30-01-2020 |
| US 10855328 | B1 | 01-12-2020 | CN | 114072688 A | 18-02-2022 |
| | | | US | 10855328 B1 | 01-12-2020 |
| | | | WO | 2021003500 A1 | 07-01-2021 |
| EP 3165941 | B1 | 26-05-2021 | CN | 107064881 A | 18-08-2017 |
| | | | EP | 3165941 A1 | 10-05-2017 |
| | | | KR | 20170058279 A | 26-05-2017 |
| | | | US | 2017131394 A1 | 11-05-2017 |

EPO FORM P0459

For more details about this annex : see Official Journal of the European Patent Office, No. 12/82